# EUROPÄISCHE PATENTANMELDUNG

(11) **EP 1 724 088 A1**
(43) Veröffentlichungstag der Anmeldung: **22.11.2006**
(21) Anmeldenummer: 06113423.5
(22) Anmeldetag: 03.05.2006
(51) Int. Cl.: B29C 45/16, G09F 13/04

(54) **Anzeige- und/oder Bedienungspaneel**

(30) Priorität: 20.05.2005 DE 102005023440
(71) Anmelder: BSH Bosch und Siemens Hausgeräte GmbH, 81739 München (DE)
(72) Erfinder: Lamprecht, Michael, 13589, Berlin (DE); Staud, Ralph, 81669, München (DE)

(57) **Zusammenfassung**

Die Erfindung betrifft ein Paneel (1) für Haushaltsgeräte mit einer verformten Blendenfront (3), in der Anzeigebereiche (4) und/oder Bedienungsbereiche (5; 6) angeordnet sind, mit einem Blendenträger (10) und mit einer zumindest teilweise bedruckten Folie (50) zwischen Blendenfront (3) und Blendenträger (10) zur Gestaltung einer Ansichts- und/oder Anzeigefläche des Paneels (1), wobei zwischen der Blendenfront (3), der Folie (50) und dem Blendenträger (10) eine Schmelzverbindung besteht. Die Erfindung betrifft außerdem ein Verfahren zu seiner Herstellung.

## Beschreibung

Die Erfindung betrifft ein Paneel für Haushaltsgeräte mit einer verformten transparenten Blendenfront, in der Anzeigebereiche und/oder Bedienungsbereiche angeordnet sind, mit einem Blendenträger und mit einer zumindest teilweise bedruckten Folie zwischen der Blendenfront und dem Blendenträger zur Gestaltung einer Ansicht- und/oder Anzeigefläche des Paneels, wobei zumindest zwischen der Blendenfront und dem Blendenträger eine Schmelzverbindung besteht.

Unter einem Paneel im Sinne der Erfindung ist eine einem Benutzer zugewandte Fläche am Haushaltsgerät zu verstehen, in der die Anzeige- und/oder Bedienungsbereiche angeordnet sind. Das Verständnis der Funktionen der Anzeige- und/oder Bedienungsbereiche wird in der Regel zum Beispiel durch Beschriftung oder Symbolisierung graphisch und/oder durch Oberflächenstrukturen haptisch unterstützt. Die Blendenfronten als erste, dem Bediener zugewandte Bestandteile des Paneel sind oftmals verformt, das heißt, sie weisen eine von einer ebenen Form abweihende Gestalt aus. Aus gestalterischen Gründen können sie beispielsweise um wenigstens eine Achse gekrümmt sein oder aus konstruktiven Gründen etwa mit einem aus ihrer Erstreckungsebene aufsteigenden Rahmen versehen sein. Dadurch sind sie nicht mehr ohne weiteres mit herkömmlichen Mitteln bedruckbar. Eine Lösungsmöglichkeit besteht in der Anordnung einer bedruckten Folie hinter der transparenten Blendenfront.

Ein derartiges Paneel, das dort als Kunststoff-Formkörper bezeichnet wird, ist aus der DE 197 177 40 C2 bekannt. Der Kunststoff-Formkörper weist eine oder mehrere integrierte, optoelektronisch aktive Leuchtfelder auf und eine mindestens im Bereich der Leuchtfelder angeordnete transluzente und kalt reckbare, dreidimensional verformte Kunststoff-Folie, wobei unter anderem die Innenseite der Kunststoff-Folie mit einem Grafikdruck versehen ist, in den die Leuchtfelder eingebettet sind. Der dreidimensional verformte Formkörper ist außerdem mit einer thermoplastischen Kunststoff-Folie hinterspritzt.

Ferner ist aus der DE 103 12 250 B3 ein Bedien- oder Anzeigeelement bekannt, das aus einem Grundkörper aus nicht weißem, transluzentem Kunststoff besteht, einer auf einer Außenfläche des Grundkörpers aufgebrachten, lichtdurchlässigen Deckschicht, die die Kontur eines zu hinterleuchtenden Symbols freilässt, und einem Streumittel, das auf einer der Außenseite gegenüberliegenden Innenfläche des Grundkörpers aufgebracht ist. Aufbau und Herstellungsweise dieses Bedien- oder Anzeigeelements können jedoch nicht auf Paneele für Haushaltsgeräte übertragen werden, weil sie für wesentlich kleinere Bedieneinheiten, nämlich als Dreh- oder Druckknöpfe in der Armaturentafel von Kraftfahrzeugen gedacht sind und daher den Anforderungen, insbesondere an Verschmutzungsresistenz und Robustheit für den Einsatz von Haushaltsgeräten nicht gewachsen sind.

Bekannt sind außerdem Paneele für Haushaltsgeräte, in denen eine bedruckte Folie zwischen einer Blendenfront und einem Blendenträger lediglich lose eingelegt wird. Da zwischen der durchsichtigen Blendenfront und der eingelegten Folie keine feste Verbindung besteht, kann in den Spalt zwischen ihnen Schmutz eindringen, der die Paneele nach längerem Gebrauch unansehnlich macht. Außerdem kann durch mechanische Einflüsse, zum Beispiel infolge der Bedienung des Haushaltsgerätes, an Tasten- und Drehknöpfen die Folie verschoben werden. Zwar wird der Gebrauch des Haushaltsgerätes dadurch nicht eingeschränkt ist, aber ein derartiges Paneel macht keinen hochwertigen Eindruck.

Aufgabe der Erfindung ist es daher, sowohl ein Paneel als auch ein Verfahren zu seiner Herstellung anzugeben, das eine Beeinträchtigung durch schwer zu behebende Verschmutzungen nahezu ausschließt und sowohl dadurch als auch durch seine sonstige mängelfreie Gestaltung einen hochwertigen Eindruck vermittelt.

Diese Aufgabe löst die Erfindung dadurch, dass bei einem Paneel der eingangs genannten Art sowohl zwischen der Blendenfront und der Folie als auch zwischen der Folie und dem Blendenträger eine an den Kontaktflächen im Wesentlichen vollflächige Schmelzverbindung besteht. Die Blendenfront, die Folie und der Blendenträger bestehen dazu aus dem gleichen Material, vorzugsweise Polycarbonat oder PMMA. Infolge der Anspritztemperaturen von etwa 250° bis 270° kommt es zu einem Aufschmelzen nur einer geringen Schichtdicke der angespritzten Folie. Beim Abkühlen verbinden sich die gleichartigen Materialen der Folie und des Anspritzgutes zu einer untrennbaren Einheit. Ist die Folie bestimmungsgemäß mit einer Lackschicht bedruckt, kommt es beim Hinterspritzen der Folie zu einem geringfügigen Aufschmelzen der Lackschicht anstatt der Folie.

Im Gegensatz zu anderen Verbindungen, zum Beispiel solchen durch Verkleben, entsteht durch Verschmelzen eine insbesondere zwischen transparenten Bauteilen unsichtbare Verbindung. Die Erfindung verfolgt also das Prinzip, die Blendenfront, die Folien und den Blendenträger zu einer untrennbaren Baueinheit miteinander zu verbinden. Neben der Lagesicherung der Folie zwischen der Blendenfront und dem Blendenträger ergibt sich durch den Fortfall einer Trennfläche, insbesondere zwischen der Blendenfront und der Folie, eine bessere Durchsicht durch die Blendenfront auf die Folie. Da die Blendenfront und der Blendenträger nun zu einem Bauteil verschmelzen, können ihre jeweiligen Wandstärken bei gleicher Stabilität verringert werden. Dieser Vorteil betrifft vor allem die Blendenfront, so dass neben der Materialeinsparung die Durchsicht auf die Folie weiter verbessert ist. Zudem können wegen ihrer geringeren Materialdicke die Anzeigeelemente näher an die Blendenfront herangerückt werden, so dass sie einerseits besser ablesbar sind und andererseits eine Schachtwirkung in diesem Bereich reduziert bzw. vermieden wird. Die verbesserte Ablesbarkeit ergibt sich einerseits aus einer reduzierten Parallaxe und andererseits aus dem Fortfall von Lupeneffekten und Verzerrungen, wie sie bei größeren Materialdicken in Kauf zu nehmen sind. Die geringere Materialdicke wirkt sich auch positiv auf die Verarbeitungsqualität der Blendenfront aus, weil geringere Materialdicken weniger Einsenkstellen infolge Materialschrumpfung und weniger unschöne Schlieren bzw. Fließlinien infolge von Scherbewegungen in der Schmelze verursachen.

Insbesondere gegenüber hinterdruckten Frontblenden bietet das erfindungsgemäße Paneel schließlich eine wesentlich höhere designerische Freiheit und mehr Gestaltungsmöglichkeiten, weil keine ebenen Druckflächen an der Blendenfront geschaffen werden müssen, sondern die Folie separat und mit guter Materialausnutzung nahezu beliebig bedruckt werden kann.

Das erfindungsgemäße Paneel muss sich nicht zwingend über die gesamte Anzeige- bzw. Bedienfläche der Haushaltsmaschine, zum Beispiel über deren gesamte Breite erstrecken. Es kann sich vielmehr auch auf nur diejenigen Teilbereiche beschränken, in denen Anzeige- und Bedienelemente angeordnet sind, und in eine Fläche eines Blendenkörpers eingesetzt sein.

Die Blendenfront wird im Allgemeinen aus glasklarem Kunststoff hergestellt, da sie eine Durchsicht auf die Folie ermöglichen soll. Der Blendenträger dagegen kann nach einer vorteilhaften Ausgestaltung der Erfindung aus transparentem oder aus farbigem Kunststoffmaterial bestehen. Bei einer Ausführung aus transparentem Kunststoffmaterial ergibt sich der Vorteil, dass der Blendenträger im Bereich von Anzeigen nicht unterbrochen werden muss, um einen Durchblick auf die Anzeige zu ermöglichen. Dies vereinfacht und verbilligt die Herstellung seiner Spritzgussform. Farbiger Kunststoff als Material für den Blendenträger dagegen bietet gestalterische Möglichkeiten, wenn die Folie zumindest teilweise transparent ist und farbliche Effekte des durchscheinenden oder durch die Folie hindurch sichtbaren Blendenträgers genutzt werden können. Bei einer durchsichtigen Folie kann dann zum Beispiel auf deren flächige Bedruckung vollständig verzichtet werden.

Nach einer weiteren vorteilhaften Ausgestaltung der Erfindung kann der Blendenträger auf seiner der Folie abgewandten Seite Positionierhilfen oder Befestigungselemente wie z. B. Rasthaken, Schweißzapfen, Licht- und Führungsschächte oder Staubschutzrahmen umfassen. Sie ermöglichen die Anordnung von Anzeigen und Tasten unmittelbar am Blendenträger und damit in unmittelbarer Nähe der Ansichtsfläche des Paneels. Dadurch können einerseits Toleranzen gering gehalten und Toleranzketten verkürzt werden und andererseits Anzeigeelemente und Schalter mit dem Blendenträger vormontiert werden, so dass sich die Montage des Paneels weiter vereinfacht.

Durch das Verschmelzen von Blendenfront, Folie und Blendenträger kann also die Materialdicke insbesondere der Blendenfront weitgehend reduziert werden. Nach einer weiteren vorteilhaften Ausgestaltung der Erfindung weist die Blendenfront Bereiche geringer Materialdicke von etwa ≤ 2,5 mm zur Ausbildung von berührungssensitiven oder kapazitiven Tasten auf. Berührungssensitive Tasten erfordern zu ihrer Betätigung nur einen geringen Hub und reagieren bereits quasi auf Berührung. Kapazitive Tasten erfordern nicht einmal mehr eine Berührung. Durch die geringe Materialdicke der Blendenfront hindurch kann bereits eine Kapazitätsänderung bei Annäherung detektiert und zu einem Schaltsignal verarbeitet werden. Zur Anordnung einer Taste muss daher in der Blendenfront kein Durchbruch mehr ausgebildet werden, so dass sich eine vollständig geschlossene Oberfläche der Blendenfront ergibt. Dies hat nicht nur optische Vorteile, sondern verhindert durch den Wegfall von Fugen auch ein Eindringen von Schmutz, so dass die Tastenmechanik bzw. -elektrik funktional und das Paneel optisch nicht beeinträchtigt werden.

Die Bedruckung der Folie bestimmt im Wesentlichen den optischen Eindruck des Paneels durch das gewählte Design einerseits und den Bedienungskomfort des Haushaltsgerätes durch ihre Beschriftung und Symbolisierung andererseits. Nach einer weiteren vorteilhaften Ausgestaltung der Erfindung kann die Folie zumindest bereichsweise als Streufolie ausgebildet sein. Als solche erzeugt sie über beleuchteten oder hinterleuchteten Bereichen einen homogenen und flächigen Lichteindruck, so dass insbesondere hinterleuchtete Symbole besser erkennbar sind. Dabei kann mittels Drucktechnik erreicht werden, dass einzelne Lichtquellen nicht mehr als solche identifizierbar sind, sondern eine einheitliche flächige Beleuchtung darstellen.

Die Aufgabe der Erfindung wird außerdem durch ein Verfahren, vorzugsweise ein Spritzgussverfahren, zur Herstellung eines verformten Paneels gelöst, auf dem Anzeigebereiche und/oder Bedienungsbereiche angeordnet sind, mit einer Blendenfront, mit einer zumindest teilweise bedruckten Folie zur Gestaltung der Ansichtsfläche des Paneels und mit einem Blendenträger, wobei die Blendenfront oder der Blendenträger in einem ersten Schritt gegen die Folie vorgespritzt und die Folie in einem zweiten Schritt zur Ausbildung des Blendenträgers oder der Blendenfront hinterspritzt wird. Die dazu verwendete Folie kann mit einem Dekor im Flächendruck und mit einer Beschriftung bzw. Symbolisierung gegebenenfalls mit Ausschnitten oder Stanzungen versehen sein. Im ersten Verfahrensschritt erhält sie vorzugsweise bereits ihre endgültige Verformung bzw. Krümmung, damit sie im zweiten Verfahrensschritt bereits als Teil einer Spritzgussform des dann hinterspritzten Teils dienen kann. Bezüglich der dazu erzielbaren Vorteile wird auf die obige Darstellung entsprechend verwiesen.

Nach einer vorteilhaften Ausgestaltung des Verfahrens kann eine Folie mit einer rauen Oberfläche angespritzt werden. Die Rauhigkeit erzeugt eine größere Folienoberfläche, die wiederum eine bessere Verbindung während des Anspritzvorgangs herstellt. Durch das Verschmelzen von Folien und Blendenfront bzw. Blendenträger wandelt sich der zunächst milchige Eindruck der rauen Folie zu einer glasklar durchsichtigen Einheit aus Blendenfront und Folie bzw. Folie und Blendenträger.

Das Prinzip der Erfindung wird im Folgenden anhand einer Zeichnung beispielshalber noch näher erläutert. In der Zeichnung zeigen:

Figur 1a eine Ansicht eines Ausschnitts aus einem Paneel,

Figur 1b eine Schnittansicht gemäß der Schnittlinie I-I in Figur 1a,

Figur 2a die Ansicht entsprechend Figur 1 mit anderer Schnittführung, und

Figur 2b eine Schnittansicht entlang der Schnittlinie II-II in Figur 2a.

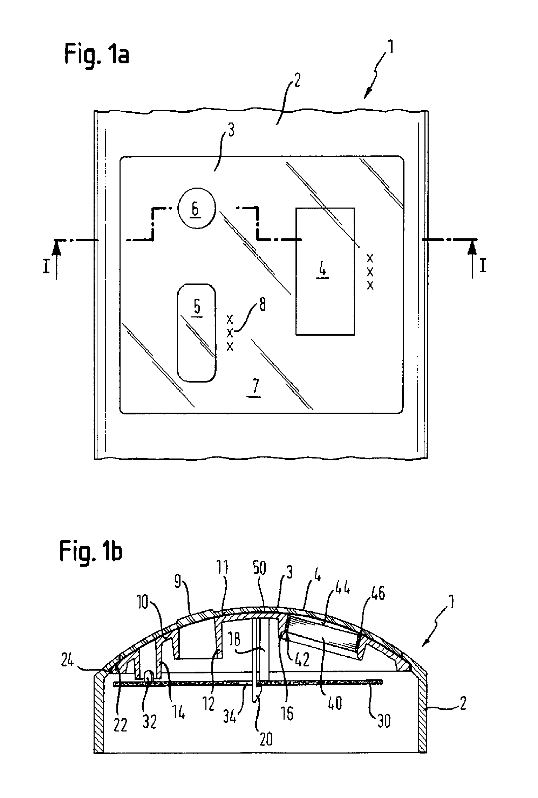

In Figur 1a ist ein Ausschnitt aus einem lang gestreckten Anzeige- und Bedienungspaneel 1 dargestellt, wie es sich einem Bediener zum Beispiel eines Haushaltgerätes darbietet. Er blickt auf einen Blendenkörper 2, in dem eine Blendenfront 3 bündig eingelassen ist. Die Ansichtsfläche der Blendenfront 3 unterteilt sich in beliebige Teilflächen, zum Beispiel in ein rechteckiges Anzeigefenster 4, ein rechteckiges Tastenfeld 5 und eine kreisförmige Einzeltaste 6. Hinter dem Anzeigefenster 4 können beliebige Anzeigen, wie zum Beispiel 7-Segment-Anzeigen oder LC-Displays angeordnet sein. Das Tastenfeld 5 und die Einzeltaste 6 können Drucktasten oder auch kapazitiv wirkende Tasten umfassen, die bereits auf eine Annäherung einer Hand bzw. eines Fingers des Bediener und eine dadurch hervorgerufene Kapazitätsänderung reagieren. Die das Anzeigefenster 4, das Tastenfeld 5 und die Einzeltaste 6 umgebende Fläche 7 der Blendenfront 3 kann nach beliebigen Designvorstellungen gestaltet werden und Beschriftungen 8 oder Symbole tragen, die dem Anzeigefeld 4 oder den Tasten 5, 6 zugeordnet sind. Sie dient außerdem dem Zweck, dahinter liegende konstruktive Details dem Bediener gegenüber unsichtbar zu machen.

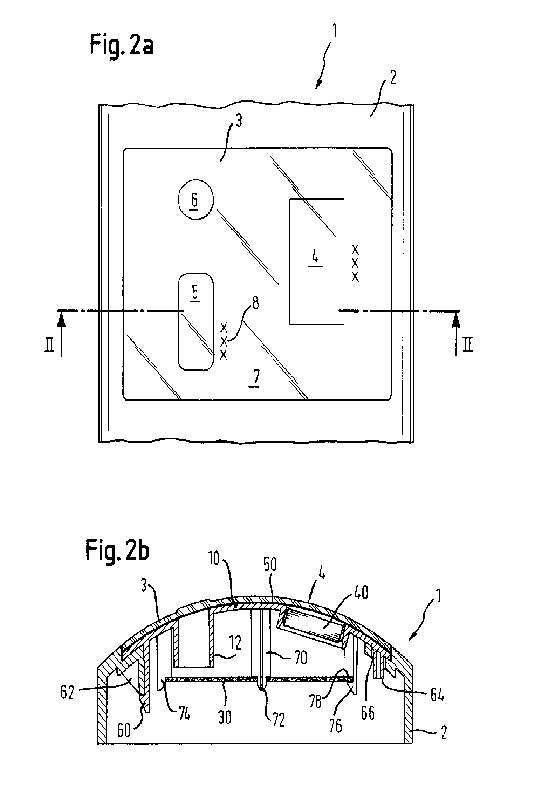

Die Blendenfront 3 weist über ihre gesamte Fläche eine im wesentlich gleiche Dicke von etwa 2 bis 3 mm auf und ist gekrümmt ausgebildet, wie in Figur 1b zu erkennen ist. Lediglich im Bereich der Einzeltaste 6 (und des Tastenfeldes 5, vgl. Figur 2b) weist sie eine Erhebung 9 mit einer zusätzlichen Dicke von 1 bis 2 mm auf. Dadurch ist die Tastenfläche vor allem haptisch hervorgehoben, so dass der Bediener denjenigen Bereich, in dem die Einzeltaste 6 auf eine Kapazitätsänderung reagiert, auch erfühlen kann. Für die Funktion der kapazitiven Einzeltaste 6 ist eine geringe Materialdicke erforderlich. Aufgrund der geringen Materialdicke der Blendenfront 3 und der geringen Höhe der Erhebung 9, die zusammen auf maximal 4 bis 5 mm kommen, ist immer noch eine so geringe Gesamtdicke der Blendenfront 3 über der Einzeltaste 6 erreicht, dass die Funktionsweise der Einzeltaste 6 nicht beeinträchtigt wird.

Die Blendenfront 3 liegt auf einem Blendenträger 10 auf, dessen Oberfläche 11 ihrer gewölbten Form folgt. Der Blendenträger 10 ist an denjenigen Stellen, an denen die Blendenfront 3 das Anzeigefenster 4, das Tastenfelder 5 oder die Einzeltasten 6 aufweist, unterbrochen. Im Bereich der Einzeltaste 6 weist er einen Führungsschacht 12 für die Führung eines Leitgummis oder einer Feder (beide nicht dargestellt) der Einzeltaste 6 auf. Ein entsprechender Führungsschacht ist auch im Bereich des Tastenfeldes 5 angeordnet, das aber wegen der gewählten Schnittführung entlang der Linie I - I in Figur 1a nicht zu sehen ist. Unterhalb des Führungsschachts 12 für die Einzeltaste 6 ist ein Lichtschacht 14 angeordnet, der einer LED 32 zugeordnet ist. Im Bereich des Anzeigefensters 4 weist der Blendenträger einen LCD-Schacht 16 auf. Darin ist ein LC-Display 40 angeordnet, das über nicht dargestellte Leiter von der Platine 30 aus mit Energie und Schaltsignalen versorgt wird.

Das LC-Display 40 hat eine im Wesentlichen ebene LCD-Oberfläche 44. Die sie überspannende Blendenfront 3 und folglich auch das Anzeigefenster 4 dagegen sind gekrümmt. Dadurch entsteht zwischen der Blendenfront 3 und der Oberfläche 44 ein Spalt, der sich im Betrieb der Maschinen mit Staub füllen und so die Sicht auf das LC-Display 40 beeinträchtigen kann. Um das LC-Display 40 staubdicht an die Blendenfront 3 anzuschließen, dient der LCD-Schacht 16 neben der Befestigung des LC-Displays 40 am Blendenträger 10 zugleich auch als Staubschutzrand. Eine am LCD-Schacht 16 angeordnete und umlaufende Dichtung 46 verschließt die Fuge 42 vollständig und verhindert so das Eindringen von Staub in den spaltförmigen Raum zwischen Blendenfront 3 und der LCD-Oberfläche 44.

Im Übrigen trägt der Blendenträger 10 einen Abstandhalter 18 und einen Rasthaken 20, der durch eine Öffnung 34 in einer Platine 30 greift und sie in Anlage am Abstandhalter 18 am Blendenträger 10 befestigt. Die Platine 30 kann dadurch am Blendenträger 10 vormontiert werden und zugleich mit ihm in einer Betriebsposition in dem Paneel 1 befestigt werden.

An seinen Randflächen weist der Blendenträger 10 Befestigungsflächen 22 auf, mit denen er am Blendenkörper 2 anliegt und dort eine umlaufende Schweißfuge 24 bildet. Die Befestigung des Blendenträgers 10 am Blendenträger 2 erfolgt mittels Ultraschallschweißung. Durch den Schweißvorgang wird die Schweißfuge 24 vollkommen abgedichtet. Dadurch sind die elektronischen Bauteile, die innerhalb des Paneels 1 angeordnet sind, gegen Feuchtigkeit geschützt, die auf das Paneel 1 einwirkt.

Die Platine 30 trägt außerdem eine LED 32, die über die Platine 30 geschaltet wird und in den Lichtschacht 14 hineinragt.

Zwischen der konvexen Oberfläche 11 des Blendenträgers 10 und der Blendenfront 3 ist eine Folie 50 angeordnet. Sie überdeckt die gesamte konvexe Oberfläche 11 des Blendenträgers 10 und unterlegt folglich die Blendenfront 3 auf ihrer gesamten Fläche. Im Bereich des Anzeigefensters 4 ist sie unbedruckt und ermöglicht damit einen unbehinderten Blick auf die Anzeige. Im Bereich des Tastenfeldes 5 und der Einzeltaste 6 ist die Folie 50 ausgeschnitten, sofern herkömmliche Drucktasten im Führungsschacht 12 angeordnet sind. Kommen berührungssensitive Tasten zum Einsatz, kann auf Ausschnitte in der Folie 50 verzichtet werden. Im Übrigen ist sie bedruckt und bestimmt somit das Design der freibleibenden Fläche 7. Außerdem trägt sie die Beschriftungen 8 oberhalb des Anzeigefensters 4 und unterhalb des Tastenfeldes 5 sowie der Einzeltaste 6. Im Bereich ihrer Bedruckung ist die Folie 50 undurchsichtig und verdeckt dadurch die dahinter liegende Konstruktion des Blendenträgers 10. So reicht sie zum Beispiel gerade soweit in das Anzeigefenster 4 hinein, dass von der Ansichtsseite gemäß Figur 1a aus insbesondere die Konstruktionsfuge 42 zwischen dem LCD-Schacht 16 und dem LC-Display 40 nicht zu erkennen ist, sondern lediglich die Anzeige selbst.

Die Bedruckung der Folie 50 im Bereich der freien Fläche 7 ist auch über dem Lichtschacht 12 der LED 32 nicht unterbrochen oder verändert. Die Folie 50 und ihre Bedruckung sind jedoch so dünn, dass ein Bediener das Aufleuchten der LED 32, zum Beispiel als Signal für die Aktivierung der Einzeltaste 6, deutlich erkennen kann, weil die LED 32 die Folie 50 in diesem Bereich gut erkennbar durchleuchtet. Ist die LED 32 dagegen inaktiv, so wird auf ihre Existenz aufgrund der durchgehend homogenen Bedruckung der Folie 50 nicht hingewiesen, womit sich ein ruhigerer, weil optisch weniger unterbrochener Gesamteindruck der Blendenfront 3 ergibt.

Das Paneel 1 wird hergestellt, in dem in einem ersten Verfahrensschritt die Folie 50 aus PMMA mit einem glasklaren Plexiglasmaterial, ebenfalls PMMA, zur Ausbildung der Blendenfront 3 vorgespritzt wird. Dazu wird die bereits fertig gedruckte Folie 50 auf eine konvexe Form aufgelegt, die bereits die Krümmung der Blendenfront 3 aufweist. Dadurch kann die Blendenfront 3 in einer einheitlichen geringen Dicke auf die Folie 50 aufgespritzt werden. Die einfache Form der Blendenfront 3 und ihre geringe Dicke bedingen dabei einen äußerst wirtschaftlichen Materialeinsatz. Da die Folie 50 und die Blendenfront 3 aus demselben Material bestehen, verschmelzen die Folie 50 und die Blendenfront 3 beim Vorspritzvorgang zu einer untrennbaren Einheit. Die Verbindung zwischen der Folie 50 und der Blendenfront 3 kann noch dadurch unterstützt werden, dass die zumindest der Blendenfront 3 zugewandte Oberseite der Folie 50 aufgeraut ist. Die dadurch vergrößerte Oberfläche der Folie 50 befördert das Verschmelzen mit der Blendenfront 3, so dass sich eine durchsichtige Verbindung zwischen beiden Bauteilen einstellt.

In einem zweiten Verfahrensschritt wird nun die Folie 50 mit der bereits angeschmolzenen Blendenfront 3 zur Ausbildung des Blendenträgers 10 mit demselben Material, aus dem sie selbst besteht, hinterspritzt. Dabei dient die vorgespritzte Folie 50 selber bereits als Spritzgussform für die Oberfläche 11 des Blendenträgers 10. Aufgrund des identischen Materials der Folie 50 und des Blendenträgers 10 entsteht auch zwischen ihnen eine ideale Verbindung durch Verschmelzen. Dies führt zum einen dazu, dass die Blendenfront 3, die Folie 50 und der Blendenträger 10 als ein einziges Bauteil erscheinen und an ihren Kontaktflächen keine optischen Beeinträchtigungen zum Beispiel durch die Ausbildung von Blasen, Kanten oder dergleichen aufweisen. Zum anderen wird die Folie 50 durch ihre vollständige Verbindung mit der Blendenfront 3 und dem Blendenträger 10 diesem gegenüber unverrückbar gehalten, was einen hochwertigen Eindruck bewirkt.

Figur 2a gibt eine identische Ansicht wie Figur 1a wider. Gleiche Merkmale sind daher mit den gleichen Bezugszeichen wie in der Figur 1a bezeichnet. Der wesentliche Unterschied zur Figur 1a besteht darin, dass ein anderer Verlauf der Schnittlinie II - II gewählt ist. Neben dem Anzeigefenster 4 erfasst er jetzt das Tastenfeld 5.

Die zugehörige Schnittansicht in Figur 2b bietet bei grundsätzlich gleichem Aufbau wie in der Ansicht 1b einige Konstruktionsvarianten. Unverändert besteht das Anzeigepaneel 1 aus einem Blendenkörper 2, in den eine Blendenform 3 bündig eingelassen ist. Die Blendenform 3 ist auf eine Folie 50 aufgespritzt, die ihrerseits mit dem Blendenträger 10 hinterspritzt ist. Im Bereich des Tastenfeldes 5 weist der Blendenträger 10 ebenfalls einen Führungsschacht 12 auf, der auch hier prinzipiell die gleichen Funktionen übernimmt. Die Schnittlinie II - II erfasst ebenso das Anzeigefenster 4, so dass sich dort und am LCD-Schacht 16 keine anderen Verhältnisse als in Figur 1b zeigen.

Abweichend von der Schnittansicht gemäß Figur 1b weist der Blendenträger 10 gemäß Figur 2b einen Rasthaken 60 auf, der einen Ansatz 62 am Blendenkörper 2 hintergreift. Damit wird die Einheit aus Blendenfront 3, Folie 50 und Blendenträger 10 dauerhaft innerhalb des Blendenkörpers 2 gehaltert. Um die für die in der Blende angeordneten elektronischen Bauteile erforderliche Dichtigkeit zu gewährleisten, ist an einer Anlagefläche des Blendenträgers am Blendenkörper eine nicht dargestellte Dichtung anzuordnen. Im Gegensatz zu den entsprechenden Teilen in Figur 1 werden die Blendenfront 3, die Folie 50 und der Blendenträger 10 nach dieser Ausführungsform also von einer Ansichtsseite aus in den Blendenkörper 2 eingesetzt.

Am gegenüberliegenden Rand der Blendenfront 3 ist ein Schweißzapfen 64 am Blendenträger 10 angeordnet. Im montierten Zustand ragt er durch einen Durchbruch 66 im Blendenkörper 2 hindurch. Dessen Überstand wird zur Befestigung des Blendenträgers 10 am Blendenkörper 2 zu einem pilzförmigen Kopf verformt.

Der Blendenträger 10 weist außerdem Elemente zur Befestigung der Platine 30 auf. Dazu zählt eine Zentrierungsstütze 70, die mit einem stiftförmigen Abschnitt 72 die Platine durchdringt und in ihrer Lage definiert. An ihrem unteren Rand ist die Platine auf einem Stützpfosten 74 gehalten, auf dem sie sowohl hinsichtlich des Abstandes zum Blendenträger 10 als auch in Richtung ihrer Erstreckungsebene definiert gehalten wird. Eine Rastnase 76 am gegenüberliegenden Rand der Platine 30, die mit einer Anlagefläche 78 zusammenwirkt, befestigt die Platine in dieser Stellung.

Da es sich bei den vorhergehenden, detailliert beschriebenen Paneelen um Ausführungsbeispiele handelt, können sie in üblicher Weise vom Fachmann in einem weiten Umfang modifiziert werden, ohne den Bereich der Erfindung zu verlassen. Insbesondere können die konkreten Ausgestaltungen der Tasten und Anzeigen in anderer Form als in der hier beschriebenen erfolgen. Ebenso kann die Aufteilung der Oberfläche der Blendenfront in einer anderen Form ausgestaltet werden, wenn dies aus Platzgründen bzw. designerischen Gründen notwendig oder erwünscht ist. Weiterhin schließt die Verwendung der unbestimmten Artikel "ein" bzw. "eine" nicht aus, dass die betreffenden Merkmale auch mehrfach vorhanden sein können.

Bezugszeichenliste

1 Paneel

2 Blendenkörper

3 Blendenfront

4 Anzeigefenster

5 Tastenfeld

6 Einzeltaste

7 Fläche

8 Beschriftung

9 Erhebung

10 Blendenträger

11 konvexe Oberfläche

12 Führungsschacht

14 Lichtschacht

16 LCD-Schacht

18 Abstandhalter

20 Rasthaken

22 Befestigungsfläche

24 Schweißfuge

30 Platine

32 LED

34 Öffnung in der Platine 30

36

40 LC-Display

42 Fuge

44 LCD-Oberfläche

46 Dichtung

50 Folie

60 Rasthaken

62 Ansatz

64 Schweißzapfen

66 Durchbruch

70 Zentrierungsstütze

72 stiftförmiger Abschnitt

74 Stützpfosten

76 Rastnase

78 Anlagefläche

## Patentansprüche

1. Paneel (1) für Haushaltsgeräte mit einer verformten Blendenfront (3), in der Anzeigebereiche (4) und/oder Bedienungsbereiche (5; 6) angeordnet sind, mit einem Blendenträger (10) und mit einer zumindest teilweise bedruckten Folie (50) zwischen Blendenfront (3) und Blendenträger (10) zur Gestaltung einer Ansichts- und/oder Anzeigefläche des Paneels (1), **dadurch gekennzeichnet, dass** zwischen der Blendenfront (3), der Folie (50) und dem Blendenträger (10) eine Schmelzverbindung besteht.

2. Paneel (1) nach obigem Anspruch, **dadurch gekennzeichnet, dass** der Blendenträger (10) aus transparentem oder farbigem Kunststoffmaterial besteht.

3. Paneel (1) nach obigem Anspruch, **dadurch gekennzeichnet, dass** der Blendenträger (10) auf seiner der der Folie (50) abgewandten Seite Positionierhilfen (12; 14; 18) und/oder Befestigungselemente (20) umfasst.

4. Paneel (1) nach obigem Anspruch, **dadurch gekennzeichnet, dass** die Blendenfront (10) Bereiche geringer Materialdicke zur Ausbildung von kapazitiven Tasten aufweist.

5. Paneel (1) nach obigem Anspruch, **dadurch gekennzeichnet, dass** die Folie (50) zumindest bereichsweise als Streufolie ausgebildet ist.

6. Verfahren zur Herstellung eines verformten Paneels (1), auf dem Anzeigebereiche (4) und/oder Bedienungsbereiche (5; 6) angeordnet sind, mit einer Blendenfront (3), mit einer zumindest teilweise bedruckten Folie (50) zur Gestaltung einer Ansichtsfläche des Paneels (1) und mit einem Blendenträger (10), wobei die Blendenfront (3) oder der Blendenträger (10) in einem ersten Schritt gegen die Folie (50) vorgespritzt und die Folie (50) in einem zweiten Schritt zur Ausbildung des Blendenträgers (10) oder der Blendenfront (3) hinterspritzt wird.

7. Verfahren nach Anspruch 1, **dadurch gekennzeichnet, dass** eine Folie (50) mit einer rauen Oberfläche angespritzt wird.
